Europäisches Patentamt

(19) European Patent Office

Office européen des brevets

(11) Publication number: **0 455 516 A2**

(12) # EUROPEAN PATENT APPLICATION

(21) Application number: 91304063.0

(51) Int. Cl.[5]: **G01V 9/00**

(22) Date of filing: 03.05.91

(30) Priority: 03.05.90 GB 9009976

(43) Date of publication of application:
06.11.91 Bulletin 91/45

(84) Designated Contracting States:
AT BE CH DE DK ES FR GB GR IT LI LU NL SE

(71) Applicant: BRITISH AEROSPACE PUBLIC
LIMITED COMPANY
11 Strand
London WC2N 5JT (GB)
Applicant: SCIEX
55 Glen Cameron Road
Thornhill, Ontario L3T 1P2 (CA)

(72) Inventor: Akery, Alan K., British Aerospace
P.L.C.
BASE, PO Box 5
Filton, Bristol BS12 7QW (GB)
Inventor: Hobbs, Phillip, British Aerospace
P.L.C.
BASE, PO Box 5
Filton, Bristol BS12 7QW (GB)
Inventor: Davidson, William D., Dr.
SCIEX, 55 Glen Cameron Road
Thornhill, Ontario L3T 1P2 (CA)

(74) Representative: Dowler, Edward Charles et al
British Aerospace plc Corporate IPR
Department, Headquarters P.O.Box 87
Building Q191 Royal Aerospace
Establishment
Farnborough Hants GU14 6YU (GB)

(54) Security procedure for detecting the possible carriage of explosives and other contraband.

(57) Security system for airport or the like where an item such as a ticket or boarding card is checked to see if it holds traces of explosive or the like picked up from the passenger's hands.

EP 0 455 516 A2

This invention relates to a security procedure for detecting the possible carriage of explosives and other contraband, more particularly but not exclusively at airports.

Experimental evidence such as that described in two papers by J J Twibell in Forensic Sciences (Vol 27, No 4, 1982, pages 783 to 791 and Vol 29, No 1, 1984, pages 284 to 290) shows that after a person has handled explosives, traces of these explosives can be passed to people or objects that subsequently contact that person. Many other substances can be similarly passed on in this way.

According to the invention, there is provided a security procedure for airports and the like, wherein a boarding card, landing card, identity card or like item is handed to a person for said person subsequently to gain passage past a check point, said card or like item being such as to absorb traces of explosives and other contraband material from said person should such traces be present upon said person, and wherein after said card or like item has been handled by said person it or at least part of it is tested for the presence of any of said traces.

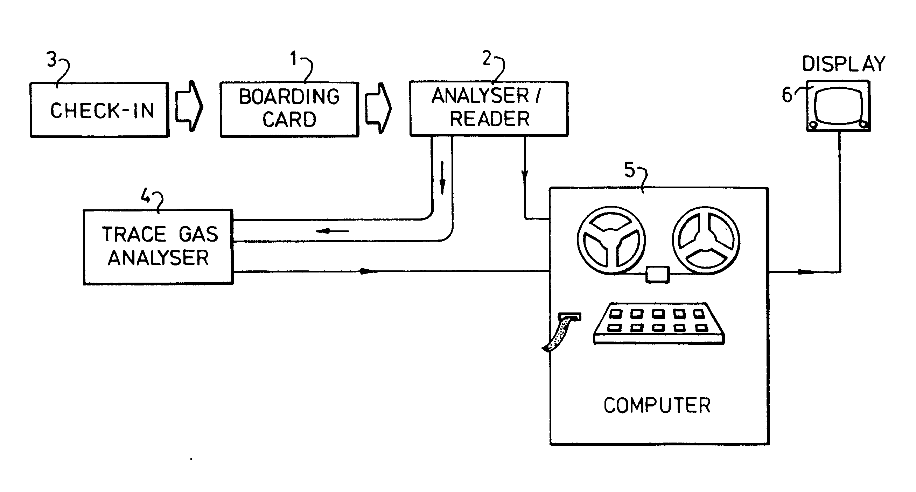

For a better understanding of the invention, reference will now be made, by way of example, to the accompanying drawing, the single figure of which is a simplified diagram of airport security apparatus.

The system of this example includes an airline boarding card 1 and card analyser/reader 2 into which the card is inserted.

The card 1 is made from or coated with a material which aids the collection and absorption of traces of explosives that contact the card either directly or indirectly. A magnetic strip or other data storage means may also be included on the card for storage of information such as the passenger's name, address and flight details thereon.

Each passenger is given an individual boarding card at the check-in desk 3 prior to boarding an aircraft. If a passenger has contacted explosives, then traces of these explosives will be passed to the card.

Before boarding the aircraft (not shown) each passenger (not shown) inserts their card 1 into the card analyser/reader 2. The analyser consists of apparatus for performing any potential method of rapidly determining the presence of trace levels of single or multiple explosive types from the surface of the card. This can be achieved by heating the surface and passing the desorbed particles into a trace gas analyser 4 as shown or by using a liquid or gaseous solvent to remove the absorbed materials form the surface preceding trace chemical analysis. Such trace analysis equipment may include mass spectrometry, gas chromatography, ion mobility spectrometry, etc. A suitable device for sensing explosives or other contraband is the Aromic (trademark) contraband tandem mass spectrometer system. The magnetic strip on card 1 is also read in reader/analyser 2 and the information thereon passed to the airline's computer system 5. The presence of explosives and the card holder's identity is then indicated by monitor 6 to security staff who can take appropriate action.

Although the detection system has been described with reference to airline security, the system could also be used on other high security applications where the presence of explosives is regarded as a threat. These include the entrances and/or exits for power plants, government offices, courts of justice, embassies and convention centres.

## Claims

1. A security procedure for airports and the like, wherein a boarding card, landing card, identity card or like item is handed to a person for said person subsequently to gain passage past a check point, said card or like item being such as to absorb traces of explosives and other contraband material from said person should such traces be present upon said person, and wherein after said card or like item has been handled by said person it or at least part of it is tested for the presence of any of said traces.